# EUROPEAN PATENT SPECIFICATION

(11) **EP 2 196 687 B1**
(45) Date of publication and mention of the grant of the patent: **23.01.2013**
(21) Application number: 09252733.2
(22) Date of filing: 04.12.2009
(51) Int. Cl.: F16B 45/02

(54) **Improvements in and relating to karabiners**
Verbesserungen an und in Zusammenhang mit Karabinerhaken
Améliorations dans et concernant des mousquetons

(30) Priority: 05.12.2008 GB 0822250
(43) Date of publication of application: 16.06.2010
(73) Proprietor: DMM Engineering Limited, Llanberis, Gwynedd, LL55 4EL (GB)
(72) Inventor: Hall, Fred, Waunffawr Gwynedd LL55 4EX (GB)
(74) Representative: Cawley, Aimee Elizabeth

(56) References cited:
- EP-A1- 0 826 890
- FR-A1- 2 829 031

## Description

This invention concerns karabiners, also known as snap hooks, for use in climbing and other activities requiring connections to be made to ropes, cables and carrying loops for equipment.

The terms "karabiner" and "snap hook" are used to indicate devices of the type generally comprising a C-shaped body, with its free ends curved towards each other and forming a gap closed by a spring-loaded gate, pivotally mounted on one of the free ends of the body (the gated end) and urged into engagement with the other free end of the body (the mating end). A thimble or other locking member may be provided either on the gate or the mating end of the body, and may be movable, for example slidably or via screw-threading, to lock the gate in a closed position. Some karabiners have the additional feature of a fixed ring for attachment of other devices.

When unlocked, the gate of a karabiner is urged closed, typically by spring means, and a rope or loop can be snapped into the karabiner by pushing it against the gate to open it. Once the rope or loop is in the confines of the C-shaped body, the gate can spring back to its closed position, where it can be locked, if desired.

EP0826890A1 describes such a karabiner or snap hook. The locking snap hook consists of a fixed C-shaped body having one end forming a retaining element and the other end in the form of a pivot for a pin which can be locked in the closed position. The pin has a connector to engage with the retaining element, a return spring and an outer coaxial locking sleeve. The pin has a locking element which can engage with either a hole or a notch in the sleeve to retain it in the locked or unlocked position. The locking element Is in the form of a spring-loaded stud which is able to pass through the hole in the sleeve or fit into its matching notch.

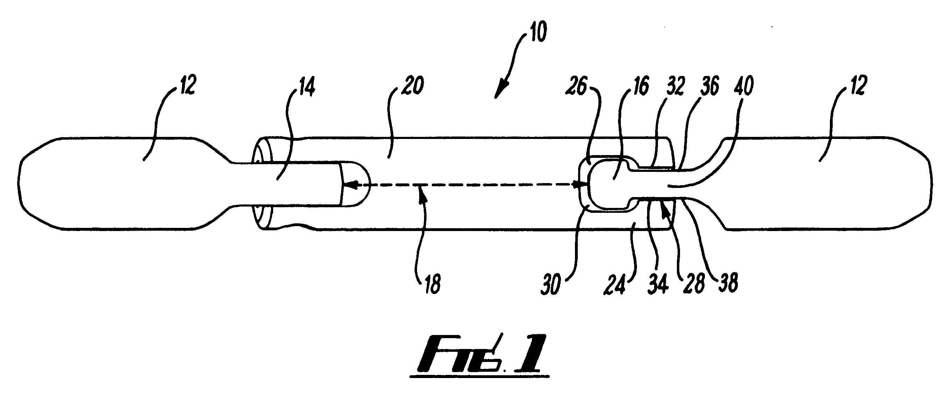

In some karabiners, the gate has a keyhole-shaped slot that engages a correspondingly-shaped mating end of the body as shown in Figures 1, 2 and 3 of the accompanying drawings, which will be described in greater detail later in the specification. However, generally, the slot has a first part with parallel sides and an enlarged closed end part. The shaped mating end of the body prior to the gate is thinned before an enlarged termination, so as to match the shape of the slot in the gate. The thinned portion has parallel sides in the region that fits the slot of the gate. It is possible, when lateral forces or loadings are applied to the gate in the vicinity of its mating with the body, for the end of the body to bend, and even fracture, causing failure of the karabiner, which can obviously have very serious implications.

Furthermore it is a requirement in some jurisdictions that gates of karabiners are able to withstand a minimum of 16 kilonewtons (kN) of force in any direction, and conventional karabiner gate designs may not be able to provide that.

An object of this invention is therefore to provide an improved karabiner.

According to the invention there is provided a karabiner comprising a generally C-shaped body, with its free ends curved towards each other and forming a gap therebetween, and a gate for closing the gap, the gate being located on one free end of the body, and the other end of the body and a free end of the gate being shaped for mutual engagement when the gate is closed,
characterized by one of the free end of the body and the gate having a shaped end with a first part having converging sides leading to an enlarged end part, and wherein the converging part of the shaped end lies within a slot of the other of the body or gate when the gate is closed, i.e. the free end of either the body or the gate is shaped such that there is a first part having converging sides leading to a second part which is enlarged compared to the first part, said first converging part being locatable in a slot of the gate or the body as appropriate when the gate is closed.

Preferably the slot may have a first part with converging sides leading to a wider enlarged part to accommodate the shaped end of the body or the gate. In this way, the slot may be shaped so as to be complementary in shape to the shaped end of the body or the gate (whichever is provided with the shaped end as appropriate).

In one preferred embodiment of the invention the gate may have the slot and thus one end of the body of the karabiner may be shaped to be locatable in the slot. However, in another preferred embodiment of the invention the free end of the body may have the slot and thus the gate may be shaped to be locatable in the slot.

In preferred embodiments of the invention the gate may pivot in the plane of the body, for ease of use of the karabiner. However, it is possible also for a karabiner to have its gate pivot out of the plane of the body, and such is also within the scope of the present invention.

Preferably the free end of the body of the karabiner of the invention may have a first part with converging sides, which converge in a plane that is normal to the plane of movement of the gate, leading to a wider part to accommodate the shaped end of the body. Compared to a prior art karabiner which has a first part of uniform reduced thickness, a karabiner according to the invention, especially having such a converging first part, is able to withstand a minimum of 16 kN of force in any direction.

The free end of the body of the karabiner may additionally have convergent sides which converge in the plane of the body.

Karabiners of the invention may also preferably have locking means for locking the gate. The locking means may preferably comprise a sleeve movable to prevent separation of the free end of the gate from the body.

In one preferred embodiment of the invention the karabiner may have its locking sleeve resiliently biased, for example spring-biased, towards a locking position. In such a case, the sleeve may be rotatably mounted on the gate or slidable along the gate.

Alternatively the sleeve may be screw-threadedly mounted on the gate.

Where the sleeve is rotatably mounted on or slidable along the gate, the sleeve may preferably be relieved, i.e. manually rotated or slid away from its resiliently-biased position, to allow the gate to be opened. Upon such rotation or sliding, the engaging part of the karabiner body may be exposed, thus allowing disengagement of the shaped end from the slot. Where the sleeve is screw-threadedly mounted on the gate, the sleeve may be relieved, i.e. unscrewed from its locking position, to allow the gate to be opened.

When in its resiliently-biased locking position, the sleeve may preferably be of increased thickness on its side that is opposite to the opening direction of the gate. Karabiners of the invention may be usefully provided with a ring at one end thereof for attachment of other equipment to the karabiner.

For a better understanding, the invention will now be further described, by way of example only, with reference to the accompanying schematic drawings (not to scale), in which:
Figure 1 is a top plan view of a prior art karabiner;
Figure 2 is a top sectional view of the karabiner of Figure 1 shown with a locking means;
Figure 3 is a cross sectional view along line A-A of Figure 2;
Figure 4 is a side view of a karabiner according to the invention in a locked condition;
Figure 5 is a top plan view of the karabiner of Figure 4 in an unlocked position;
Figure 6 is a detailed top plan view showing the engagement of the gate and body of the karabiner of Figure 5;
Figure 7 is a top sectional view of the karabiner of Figure 6;
Figure 8 is a cross sectional view along line B-B of Figure 7;
Figure 9 is a perspective view of a karabiner according to the invention;
Figure 10 is a perspective view of the karabiner of Figure 9 without a gate; and
Figure 11 is a side view of the karabiner of Figure 10.

Referring to Figures 1, 2 and 3 of the accompanying drawings, a prior art karabiner 10 comprises a generally C-shaped body 12 having its free ends 14,16 generally facing each other, i.e. being generally mutually opposed, but leaving a gap 18 (represented by a dotted line) therebetween, i.e. the two ends do not meet. Pivotally mounted on one free end 14 of the body 12 is a gate 20. Karabiner 10 is also provided with an outer sleeve 50 for locking the gate 20 closed.

The gate 20 is generally a shaped bar with an internal spring arrangement (not shown) for resiliently biasing (urging) the gate 20 to a closed position. At its free end 24 the gate 20 has a slot 26 of keyhole type having a narrower lead-in portion 28 and an enlarged end portion 30. The lead-in portion 28 has parallel sides 32,34.

The free end 16 of the body 12 also has parallel sides 36,38 being shaped to fit the slot 26 of the gate 20 when the gate 20 is closed. Thus, the free end 16 of the body has a narrow part 40 that locates in the gate 20. It is this narrow part 40 of the free end 16 of the body 12 that gives rise to a weak point in the karabiner 10, wherein a sideways force (shown as arrow F) on the gate 20 can cause the free end 16 of the body 12 at its narrowest to bend and even fracture. If this were to happen whilst in use during climbing, the implications could be fatal.

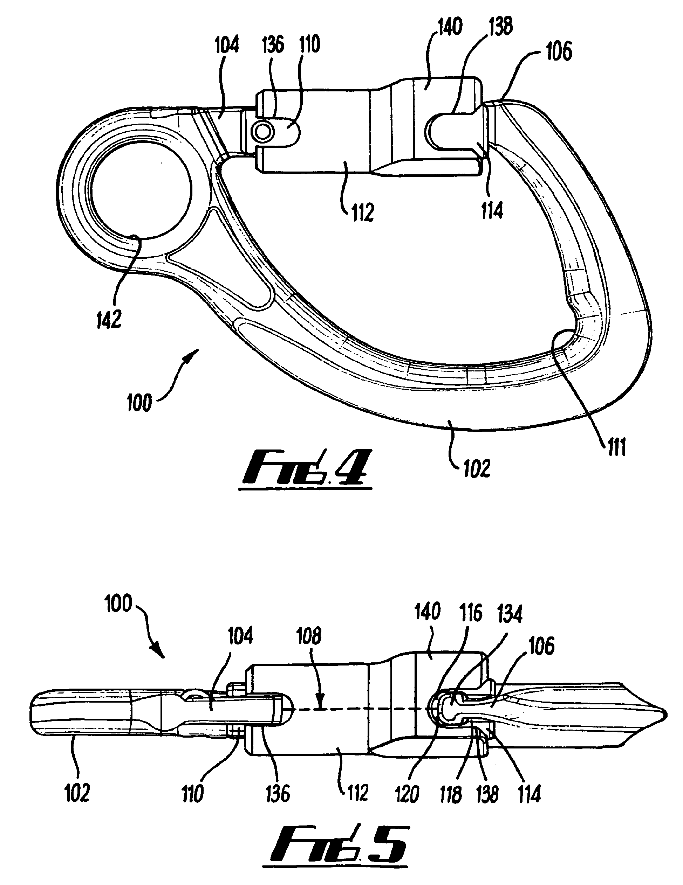

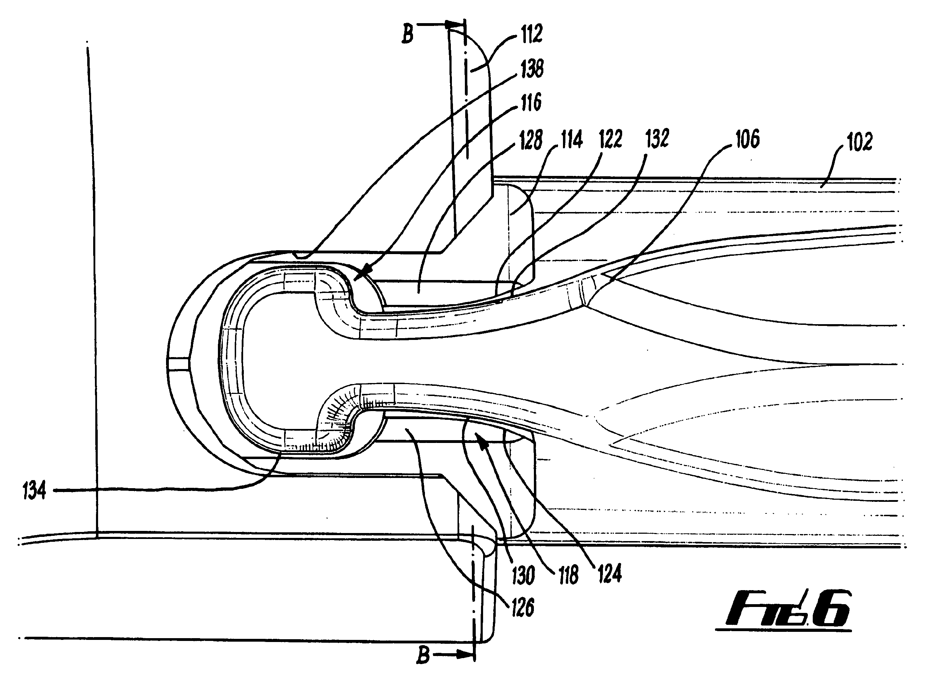

Turning to Figures 4 to 8 of the accompanying drawings, a karabiner 100 comprises a generally C-shaped body 102 having its free ends 104,106 generally facing each other, i.e. being generally mutually opposed, but leaving a gap 108 (represented by a dotted line) therebetween, i.e. the two ends do not meet. Pivotally mounted on one free end 104 of the body 102 is a gate 110.

Where the body 102 of the karabiner 100 curves towards its top and its bottom, it is shaped to provide locations for ropes or the like. At its top, as shown, there is a slight recess 111. At the bottom, the body is curved upwards at a more acute angle than at the top to provide a relatively confined location for a rope or the like.

The gate 110 is generally a shaped bar with an internal spring arrangement (not shown) for resiliently biasing (urging) the gate 110 to a closed position. The gate 110 also has a rotatable outer sleeve 112 for locking the gate closed. At its free end 114 the gate 110 has a slot 116 of keyhole type having a narrower lead-in portion 118 and an enlarged end portion 120. The lead-in portion 118 has its sides 122,124 converging towards the enlarged end portion 120. This convergence may be described as being in a plane that is normal to the plane of movement of gate 110. Additionally, top edges 126,128 of the lead-in portion 118 of the slot 116 are chamfered to facilitate entry of the free end 114 of the body of the karabiner into the slot 116 as the gate is closed.

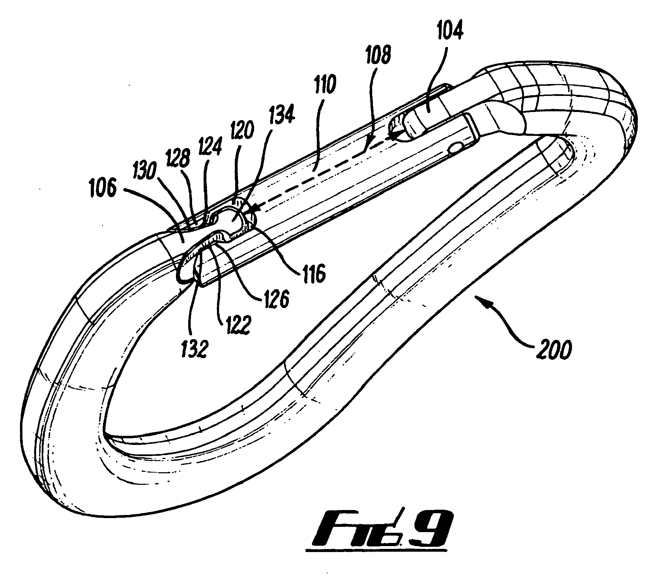

The free end 106 of the body also has sides being shaped to fit the slot 116 of the gate when the gate is closed. Thus, the free end 106 of the body narrows, having convergent sides 130, 132, leading to an enlarged end 134. The enlarged end 134 can be more clearly seen in Figure 9 of the drawings. The free end 106 of the body also converges towards the enlarged end normal to the plane of the body. When the gate is closed, the gate overlaps a major part of the convergent sides of the free end of the body.

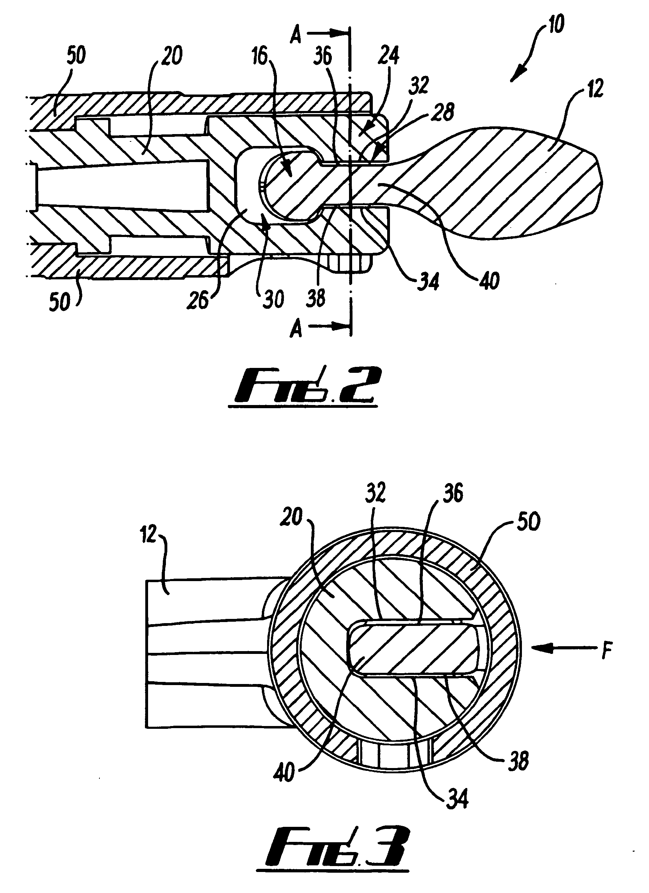

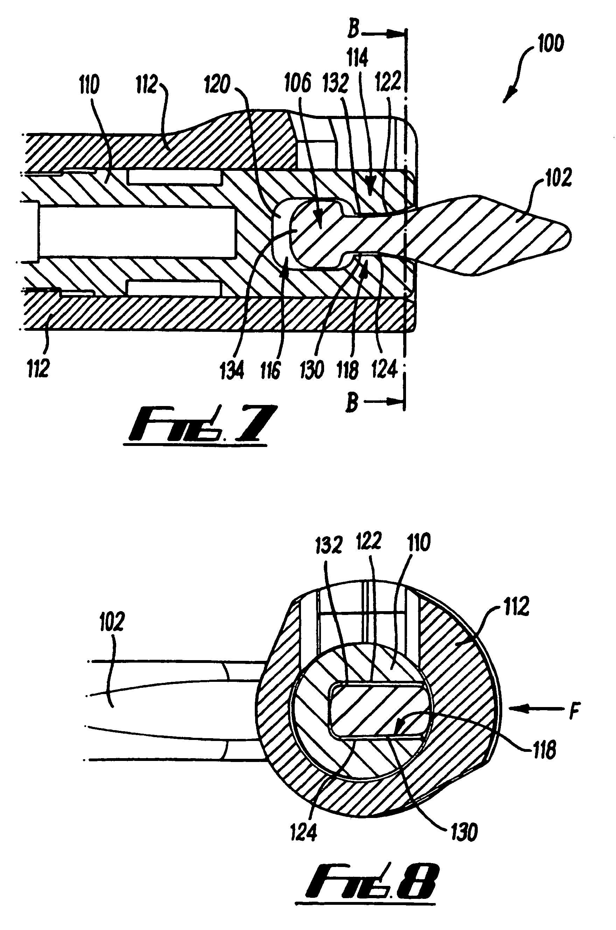

As is clearly shown in Figure 8, the distance between convergent sides 130,132 of the free end 106 of the body is much greater than the corresponding distance between sides 36,38 of the free end of the prior art karabiner shown in Figure 3. This increased distance is achieved by providing converging sides 130,132 rather than mutually parallel sides 36,38, and results in an increased cross sectional area of contact between the free end 106 of the body and the gate 110 in the present invention.

The rotatable sleeve 112 has at opposite ends slots 136,138, so that when rotated to an unlocked position, as shown in Figure 3, the slots 136,138 are aligned with the ends 104 and 106 of the body, so that the gate 110 can be pushed inwards of the body for insertion of a rope or attachment of any other equipment to the karabiner. The rotatable sleeve 112 is spring-biased to a locking position, in which the slots are out of line with the body of the karabiner by 90°, so that pressure on the gate will not cause it to open.

The sleeve 112 is generally thicker on its side 140 that is outwards of the karabiner when the gate is locked by the sleeve for additional strength. However it is equally plausible that the sleeve 112 may be of uniform thickness around its circumference and/or along its length.

The karabiner 100 also has a ring 142 at one end thereof for attachment of other equipment to the karabiner.

When the sleeve 112 has been rotated out of its locking position, once pressure is applied to the gate 110 inwardly towards the interior of the body of the karabiner, it will open but then spring back to a closed position when the pressure is removed. Thus, a rope or the like can be pushed into the karabiner through the gate which then snaps back to close the karabiner and retain the rope or the like therein.

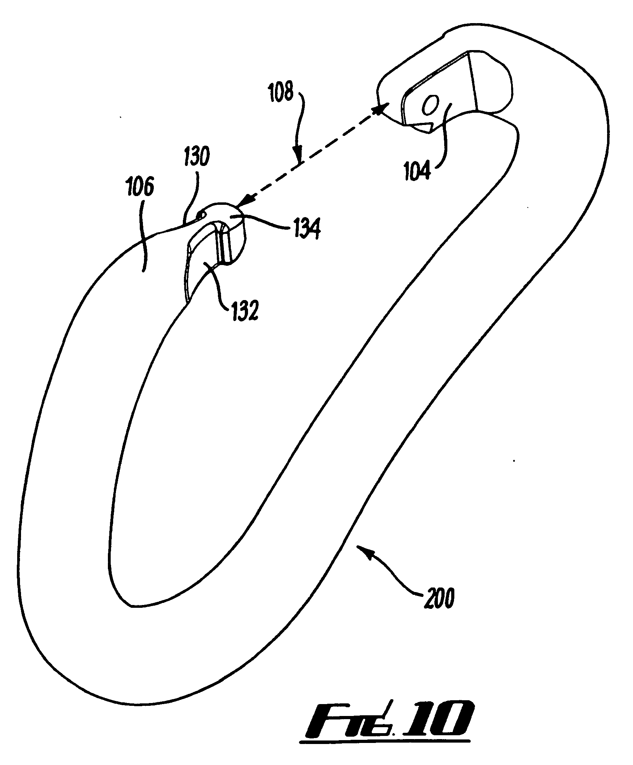

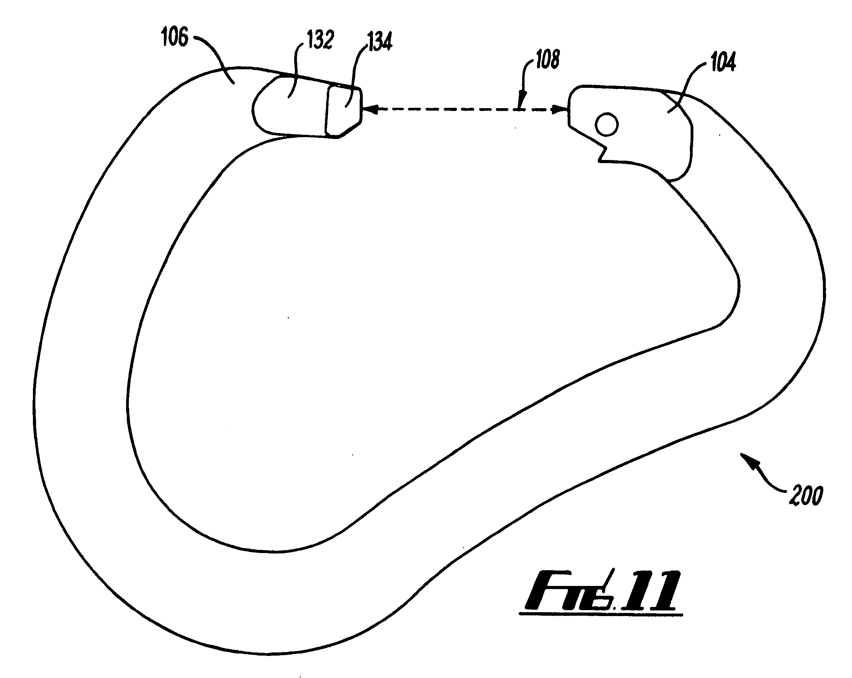

Figures 9, 10 and 11 show a karabiner 200 according to the invention. The karabiner has a different shape to the karabiner of Figures 4 to 8 but the gate arrangement is the same and so the same reference numbers have been used for simplicity.

It is believed that a karabiner according to the invention can be produced able to withstand a minimum force of 16 kilonewtons (kN) on the gate in any direction.

## Claims

1. A karabiner (100;200) comprising a generally C-shaped body (102), with its free ends (104,106) curved towards each other and forming a gap (108) therebetween, and a gate (110) for closing the gap (108), the gate (110) being located on one free end (104) of the body (102), and the other end (106) of the body (102) and a free end (114) of the gate (11) being shaped for mutual engagement when the gate (110) is closed,
**characterized by** one of the free end (104;114) of the body (102) and the gate (110) having a shaped end with a first part having converging sides (122,124;130,132) rather than mutually parallel sides leading to an enlarged end part (120;134), and wherein the converging part of the shaped end lies within a slot (116) of the other of the body (102) or gate (110) when the gate is closed.

2. A karabiner as claimed in claim 1, **characterized in that** the slot (116) has a first part (118) with converging sides (122,124) leading to a wider enlarged part (120) to accommodate the shaped end of the body (102) or the gate (110).

3. A karabiner as claimed in claim 1 or 2, **characterized in that** the gate (110) has the slot (116).

4. A karabiner as claimed in claim 1 or 2, **characterized in that** the free end (106) of the body (102) has the slot (116).

5. A karabiner as claimed in any one of claims 1 to 4, **characterized in that** the gate (110) pivots in the plane of the body (102).

6. A karabiner as claimed in any one of claims 1 to 5, **characterized by** having locking means (112) for locking the gate (110).

7. A karabiner as claimed in claim 6, **characterized in that** the locking means (112) comprises a sleeve movable to prevent separation of the free end (114) of the gate (110) from the body (102).

8. A karabiner as claimed in claim 7, **characterized in that** the sleeve (112) is resiliently biased towards a locking position.

9. A karabiner as claimed in claim 7 or 8, **characterized in that** the sleeve (112) is rotatably mounted on the gate (110).

10. A karabiner as claimed in claim 7 or 8, **characterized in that** the sleeve (112) is slidable along the gate (110).

11. A karabiner as claimed in claim 7, **characterized in that** the sleeve (112) is screw-threadedly mounted on the gate (110).

12. A karabiner as claimed in any one of claims 7 to 11, **characterized in that** the sleeve (112) is relieved to allow the gate (110) to be opened.

13. A karabiner as claimed in any one of claims 7 to 12, **characterized in that** the sleeve (112) is thicker on its side (140) opposite to the opening direction of the gate (110) when the sleeve (112) is in a locking position.

14. A karabiner as claimed in any one of claims 1 to 13 **characterized by** having a ring (142) at one end thereof.

15. A karabiner as claimed in any on of claims 1 to 14, **characterized in that** the free end (106) of the body (102) has convergent sides (130,132) normal to the plane of the body (102).

## Patentansprüche

1. Karabinerhaken (100; 200), der aufweist: einen im Allgemeinen C-förmigen Körper (102), wobei seine freien Enden (104, 106) in Richtung zueinander gebogen sind und einen Spalt (108) dazwischen bilden; und ein Gitter (110) für das Verschließen des Spaltes (108), wobei das Gitter (110) an einem freien Ende (104) des Körpers angeordnet ist, und wobei das andere Ende (106) des Körpers (102) und ein freies Ende (114) des Gitters (110) für einen gegenseitigen Eingriff geformt sind, wenn das Gitter (110) geschlossen wird,
**dadurch gekennzeichnet, dass** eines von freiem Ende (104; 114) des Körpers (102) und Gitter (110) ein geformtes Ende aufweist, wobei ein erster Teil konvergierende Seiten (122, 124; 130, 132) eher als gegenseitig parallele Seiten aufweist, die zu einem vergrößerten Endteil (120; 134) führen, und wobei der konvergierende Teil des geformten Endes innerhalb eines Schlitzes (116) des anderen von Körper (102) oder Gitter (110) liegt, wenn das Gitter geschlossen wird.

2. Karabinerhaken nach Anspruch 1, **dadurch gekennzeichnet, dass** der Schlitz (116) einen ersten Teil (118) mit konvergierenden Seiten (122, 124) aufweist, was zu einem breiteren vergrößerten Teil (120) führt, um das geformte Ende des Körpers (102) oder das Gitter (110) aufzunehmen.

3. Karabinerhaken nach Anspruch 1 oder 2, **dadurch gekennzeichnet, dass** das Gitter (110) den Schlitz (116) aufweist.

4. Karabinerhaken nach Anspruch 1 oder 2, **dadurch gekennzeichnet, dass** das freie Ende (106) des Körpers (102) den Schlitz (116) aufweist.

5. Karabinerhaken nach einem der Ansprüche 1 bis 4, **dadurch gekennzeichnet, dass** sich das Gitter (110) in der Ebene des Körpers (102) dreht.

6. Karabinerhaken nach einem der Ansprüche 1 bis 5, **dadurch gekennzeichnet, dass** er eine Verriegelungseinrichtung (112) für das Verriegeln des Gitters (110) aufweist.

7. Karabinerhaken nach Anspruch 6, **dadurch gekennzeichnet, dass** die Verriegelungseinrichtung (112) eine Hülse aufweist, die beweglich ist, um die Trennung des freien Endes (114) des Gitters (110) vom Körper (102) zu verhindern.

8. Karabinerhaken nach Anspruch 7, **dadurch gekennzeichnet, dass** die Hülse (112) in Richtung einer Verriegelungsposition elastisch vorgespannt wird.

9. Karabinerhaken nach Anspruch 7 oder 8, **dadurch gekennzeichnet, dass** die Hülse (112) drehbar am Gitter (110) montiert ist.

10. Karabinerhaken nach Anspruch 7 oder 8, **dadurch gekennzeichnet, dass** die Hülse (112) längs des Gitters (110) verschiebbar ist.

11. Karabinerhaken nach Anspruch 7, **dadurch gekennzeichnet, dass** die Hülse (112) mit Schraubengewinde am Gitter (110) montiert ist.

12. Karabinerhaken nach einem der Ansprüche 7 bis 11, **dadurch gekennzeichnet, dass** die Hülse (112) freigegeben wird, damit das Gitter (110) geöffnet werden kann.

13. Karabinerhaken nach einem der Ansprüche 7 bis 12, **dadurch gekennzeichnet, dass** die Hülse (112) auf ihrer Seite (140) entgegengesetzt der Öffnungsrichtung des Gitters (110) dicker ist, wenn sich die Hülse (112) in ihrer Verriegelungsposition befindet.

14. Karabinerhaken nach einem der Ansprüche 1 bis 13, **dadurch gekennzeichnet, dass** er einen Ring (142) an einem Ende davon aufweist.

15. Karabinerhaken nach einem der Ansprüche 1 bis 14, **dadurch gekennzeichnet, dass** das freie Ende (106) des Körpers (102) konvergierende Seiten (130, 132) senkrecht zur Ebene des Körpers (102) aufweist.

## Revendications

1. Mousqueton (100, 200), comprenant un corps ayant généralement une forme en C (102), ses extrémités libres (104, 106) étant courbées l'une vers l'autre et formant un espace (108) entre elles, et une grille (110) pour fermer l'espace (108), la grille (110) étant agencée sur une extrémité libre (104) du corps (102), et l'autre extrémité (106) du corps (102) et une extrémité libre (114) de la grille (110) étant formées en vue d'un engagement mutuel lorsque la grille (110) est fermée ;
**caractérisé en ce qu'**une extrémité libre, l'extrémité libre (104; 114) du corps (102) ou de la grille (110), comporte une extrémité profilée, une première partie comportant des côtés convergents (122, 124 ; 130, 132), plutôt que des côtés mutuellement parallèles, établissant une partie d'extrémité élargie (120 ; 134), la partie convergente de l'extrémité profilée se situant dans une fente (116) de l'autre élément, le corps (102) ou la grille (110), lorsque la grille est fermée.

2. Mousqueton selon la revendication 1, **caractérisé en ce que** la fente (116) comporte une première partie (118) avec des côtés convergents (122, 124), établissant une partie davantage élargie (120) pour recevoir l'extrémité profilée du corps (102) ou la grille (110).

3. Mousqueton selon les revendications 1 ou 2, **caractérisé en ce que** la grille (110) comporte la fente (116).

4. Mousqueton selon les revendications 1 ou 2, **caractérisé en ce que** l'extrémité libre (106) du corps (102) comporte la fente (116).

5. Mousqueton selon l'une quelconque des revendications 1 à 4, **caractérisé en ce que** la grille (110) pivote dans le plan du corps (102).

6. Mousqueton selon l'une quelconque des revendications 1 à 5, **caractérisé en ce qu'**il comporte un moyen de verrouillage (112) pour verrouiller la grille (110).

7. Mousqueton selon la revendication 6, **caractérisé en ce que** le moyen de verrouillage comprend un manchon pouvant être déplacé pour empêcher la séparation de l'extrémité libre (114) de la grille (110) du corps (102).

8. Mousqueton selon la revendication 7, **caractérisé en ce que** le manchon (112) est poussé de manière élastique vers une position de verrouillage.

9. Mousqueton selon les revendications 7 ou 8, **caractérisé en ce que** le manchon (112) est monté de manière rotative sur la grille (110).

10. Mousqueton selon les revendications 7 ou 8, **caractérisé en ce que** le manchon (112) peut glisser le long de la grille (110).

11. Mousqueton selon la revendication 7, **caractérisé en ce que** le manchon (112) est monté par filet de vis sur la grille (110).

12. Mousqueton selon l'une quelconque des revendications 7 à 11, **caractérisé en ce que** le manchon (112) est dégagé pour permettre l'ouverture de la grille (110).

13. Mousqueton selon l'une quelconque des revendications 7 à 12, **caractérisé en ce que** le manchon (112) est plus épais sur son côté (140) opposé à la direction d'ouverture de la grille (110) lorsque le manchon (112) se trouve dans une position de verrouillage.

14. Mousqueton selon l'une quelconque des revendications 1 à 13, **caractérisé en ce qu'**il comporte un anneau (142) au niveau de l'une de ses extrémités.

15. Mousqueton selon l'une quelconque des revendications 1 à 14, **caractérisé en ce que** l'extrémité libre (106) du corps (102) comporte des côtés convergents (130, 132) perpendiculaires au plan du corps (102).
